# EUROPEAN PATENT APPLICATION

(11) **EP 3 627 378 A1**
(43) Date of publication of application: **25.03.2020**
(21) Application number: 18195464.5
(22) Date of filing: 19.09.2018
(51) Int. Cl.: G06K 9/00

(54) **ENHANCING THE DETECTION OF NON-STRUCTURED OBJECTS ON A DRIVEWAY**

(71) Applicant: Conti Temic microelectronic GmbH, 90411 Nürnberg (DE)
(72) Inventor: James, Sojo, 89231 Neu-Ulm (DE); Manjunatha, Sumukha, 560102 Bengalore (IN); Nagaraj, Avinash, 89077 Ulm (DE)

(57) **Abstract**

The invention relates to a system and a method for an automated detection of non-structured objects on a driveway for a vehicle, particularly for a vehicle with a driver assistance system. The object detection system (200) for a vehicle (100), for detecting an object (120) on a driveway (150) comprises a mono-camera (300) configured to capture an image (320) of at least a part of the driveway (150). Furthermore, it comprises a determining module (410) configured to determine a distinctive part of the image (320) as an object-candidate (390), a depth module (420) configured to estimate a depth-value (429) of the object-candidate (390), a classification module (430) configured to classify an object-class (439) of the object-candidate (390), an image-processing module (440) configured to estimate a block-value (449) of the object-candidate (390), and a fusion module (450) configured to select, according to a predefined criterion, at least one of the depth-value (429), the object-class (439), and/or the block-value (449), and to create a fusion-value (459), wherein the object detection system (200) confirms the object-candidate (390) as a detected object (395), when the fusion-value (459) fulfils a predefined hypothesis.

## Description

The invention relates to a system and a method for an automated detection of non-structured objects on a driveway for a vehicle, particularly for a vehicle with a driver assistance system, e.g. for a partly or fully autonomous vehicle. Further, the invention relates to a program element and a computer-readable device.

In a vehicle that uses a driver assistance system, often a detection of various objects, such as houses, pedestrians, animals, or other vehicles by an automated detection system is performed. Many of these objects can be detected as a structured object by the automated detection system and may be labelled as houses, pedestrians, animals, or other vehicles, respectively. However, the vehicle may also encounter a non-structured object on a driveway of the vehicle. Moreover, the non-structured object may be a potential threat to the vehicle and/or to a driver of this vehicle, for instance in cases where the non-structured object comprises an accumulation of stones, e.g. fallen down from a wall. Some of existing driver assistance systems may have problems to detect the non-structured object.

Therefore, it is an object of this invention to enhance the detection of the non-structured objects on the driveway.

An aspect of this invention relates to an object detection system for a vehicle, for detecting an object on a driveway. The vehicle may be a car, a bus, a truck, and/or a motorbike. The object may comprise or be an accumulation of stones, e.g. fallen down from a wall, items like pieces of wood or a bike, e.g. fallen down from a vehicle, and/or lying on the road, plastic/fibre parts of vehicles, broken tires, or a pedestrian or a dead animal. The object may comprise several parts of different sizes, e.g. stones. The object may be big enough to potentially harm the vehicle, i.e. the size of interest of the objects may be a different one for a car, a truck, or a bike. The object may not be a target to be recognized by conventional object detection systems. The driveway may be a path where the vehicle is able to drive on, e.g. a street, a road, a motorway, or other ways. The driveway may comprise or not comprise lanes or other borders.

The detection system comprises a camera configured to capture an image of at least a part of the driveway. The camera may be a single camera ("mono-camera") attached to or integrated in the vehicle, the camera may, e.g., be a stereo-camera or even more cameras, wherein the camera may be run as a mono-camera, i.e. the system may use only one of those cameras. The image captured by the camera may be stored in a volatile or non-volatile memory. The detection system may use the image coming directly from the camera and/or from the memory. The image may comprise a bigger part of the vehicle's environment or only the driveway. The image may be part of a sequence of images. The detection system may work in a "real-time mode", i.e. its function may comprise timing constraints.

The detection system comprises a determining module configured to determine a distinctive part of the image as a region of interest or an object-candidate. The distinctive part of the image may comprise the complete image, or a part of it. The part of the image may be a part of a bottom part, e.g. the lower half or the lower third, of the image. The part of the image may become the distinctive part due to a predefined criterion, e.g. due to a different light intensity or a different colour, compared to one or more neighbouring pixel, e.g. due to a change in intensity or colour with respect to the neighbouring pixels. The region of interest or object-candidate may comprise a preliminary selection of an area of interest in the image, within which the object or the object-candidate may be found. The region of interest may be used by the following modules of the detection system, i.e. the object-candidate may be discarded or confirmed to be a (detected) object, e.g. by a further module of the detection system.

The detection system comprises a depth module configured to estimate a depth-value of the region of interest or object-candidate. The depth-value (or "spatial information") may be an attribute to the object-candidate that corresponds to a distance between the camera and the object-candidate. There may be one or more ways for the depth module to obtain the depth-value of the object-candidate. The depth module may, for instance, use a depth map. The depth map may be acquired by using a calibrated camera, e.g. a camera that has been calibrated by using specific chequerboard patterns. The calibration may include the current image and, additionally, an image captured in a previous time step. The calibration may have been performed before capturing the image, e.g. during the camera's manufacturing process. The depth module may, as a further example, use a device that performs a so-called "Structure from Motion" (SfM) method. This technique estimates three-dimensional structures from two-dimensional image sequences, e.g. from the mono-camera; the two-dimensional image sequences may be coupled with local motion signals, e.g. from a tachometer. The depth module may, when it has access to an information from a stereo-camera, use this information - e.g. the stereo disparity - for estimating or confirming the depth-value. The depth-value, as provided by the depth module, may include an "existence probability" for the object-candidate, i.e. a probability for the object-candidate to correspond to an object in the real world.

The detection system comprises a classification module configured to classify an object-class of the object-candidate. The object-class may comprise an object-class "debris". The classification of the object-candidate may include an existence probability for the object-candidate. The classification module may use a machine-learning based approach. The machine-learning may be done by a so-called "Convolutional Neural Network" (CNN) . The training of the CNN may include to use a large number of images, and, e.g., to perform some manual marking (or labelling) of the objects and road regions, for instance by classifying them as members of object-class "Debris" and "Road", respectively. The training of the CNNs may be done on the basis of ground truth labelling on a large dataset of images, where debris objects and road regions are manually labelled. The classification of "debris" objects may use a pre-trained model.

The detection system comprises an image-processing module configured to estimate a block-value of the object-candidate. Since the object may be a non-structured object, the image-processing module may not identify this as one object, but as several objects. Thus, the image-processing module may include some post-processing, which may identify these several objects as parts of one object, e.g. as a block or a connected object. The block or a connected object may unify these parts and output the connected object as a "block-value", which may comprise "synthetized" dimensions, e.g. "synthetized" width and/or height, so that the block corresponds to more than one object in the real world. The image-processing module may use techniques such as edge and/or texture recognition, colour and/or intensity variation, and/or further techniques and/or a combination of these techniques. Changes in at least one of these values may be caused by a presence of objects on the driveway and, thus, provides some probability that these changes correspond to a "debris" object. Intensity variation may use a technique that attributes each pixel of the image with an intensity or a change in intensity. The intensity may correspond to a brightness-value of this pixel. The image-processing module may use a "k-means clustering algorithm" applied to, e.g., two or more clusters (e.g. road and "others") to detect variations on the road area. This may indicate some probability that a "debris" object is on the driveway.

The detection system comprises a fusion module configured to select, according to a predefined criterion, at least one of the depth-value, the object-class, and/or the block-value, and to create a fusion-value. The fusion module may consider outputs of one or of multiple detection processes. The fusion and/or the selecting of the multiple detection processes may include some merging, e.g. by mapping one attributed image of one kind on an attributed image of another kind. The predefined criterion may consider the existence probability (and/or confidence probability), or the combined and/or weighted probabilities, attributed to the depth-value, the object-class, and/or the block-value. The fusion may be based on a probabilistic model, where each of the detection processes' outputs are integrated. The confidence of detections and/or overlap areas between the detections may be criteria which are taken into account by the fusion module. The fusion-value may include a final confidence probability, e.g. on the existence of the object-candidate. The final confidence probability may be compared against a predefined threshold.

The object detection system confirms the object-candidate as a detected object, when the fusion-value fulfils a predefined hypothesis. The predefined hypothesis may comprise the predefined threshold of the final confidence probability. The predefined hypothesis may depend on the vehicle, e.g. on the type of vehicle. The predefined hypothesis may comprise a predefined height and/or width of the object-candidate. For some cars, for instance, the object-candidate may be discarded if it has a height of less than 3 cm; for motorbikes, the hypothesis may include a height of less than 1 cm. The predefined hypothesis may comprise a predefined temporal existence. For example, an appearing and later vanishing object-candidate may be discarded; an example of an object-candidate with low predefined temporal existence may be a flying object, e.g. a ball, or a temporary artefact caused e.g. by the camera. After having confirmed the object-candidate as a detected object, a predefined action may be initiated, e.g. a warning may be emitted by a system connected to the object detection system, or the confirming may be one of the input-criteria to initiate a braking of the vehicle. The predefined action may include to display the detected object on, e.g., a screen within the vehicle, for example as a box or a frame around the detected object.

Hence, an object detection system according to this invention provides a means for enhancing the detection of a non-structured object on the driveway, e.g. by a more accurate and/or more reliable recognition of the non-structured object. Particularly the false detection of individual methods are improved, at least partly. Furthermore, the object detection system may provide further useful information, e.g. the distance to the non-structured object and/or the dimensions of the object.

In an embodiment, the object detection system further comprises a tracking module configured to store at least the detected object. The tracking module uses the results of the fusion module. The tracking module may store a history of fusion-results, e.g. the detected objects. The detected objects may be enriched with probabilities associated with each of the objects, with the size and/or with further attributes of the objects. The tracking module may, additionally, store object-candidates, which have been discarded, possibly with their attributes and/or reasons for having them discarded.

In an embodiment, the tracking module is configured to modify the predefined hypothesis. Since the tracking module may provide a well-defined storage of "experience" concerning non-structured objects, the tracking module may further improve the quality of the object detection system's inferences, concerning, for instance, the probability of existence of object-candidates, and/or the strategy of the fusion module, e.g. concerning the merging of the partial results.

In an embodiment, the object detection system further comprises a pre-processing module configured to limit the scope for finding the region of interest or the object-candidate within the image-file to the driveway. The pre-processing module may be part of or associated with the determining module. The pre-processing module may discard the object-candidate in an "early stage", i.e. before the depth module, the classification module, and/or the image-processing module. This may reduce the performance-need of these "follower modules".

In an embodiment, the object has a height of between 1 cm and 100 cm, particularly between 2 cm and 10 cm, and a width of between 5 cm and 200 cm, particularly between 10 cm and 50 cm. A relevant size of the object may dependent on the type of vehicle; a truck, for instance, may be able to tolerate to drive over higher objects than a motorbike.

In an embodiment, the depth module comprises at least one of a depth map module, and/or a Structure from Motion, SfM, module. The depth map may be acquired by using a calibrated camera. The depth module may, as a further example, use a device that performs a so-called "Structure from Motion" (SfM) method. This technique estimates three-dimensional structures from two-dimensional image sequences, e.g. from the mono-camera; the two-dimensional image sequences may be coupled with local motion signals.

In an embodiment, the classification module comprises a trained neural network. The neural network may be one kind of a group of Artificial Neural Networks (ANN), particularly a "Convolutional Neural Network" (CNN) . The training of the CNN may include to use a large number of images, and, e.g., to perform some manual marking (or labelling) of these objects, for instance by classifying them as members of the object-class "debris".

In an embodiment, the image-processing module comprises at least one of an object identifier module, and/or an object clustering module. The object identifier module may be configured to label objects like a roadway, lane-lines, debris objects, and others. The object clustering module may be configured to cluster parts of a debris object to one or more blocks.

In an embodiment, the fusion module comprises at least one of a selection module, and/or a merging module. The selection module may select, considering outputs of one or of multiple detection processes, at least one of the depth-value, the object-class, and/or the block-value. This may be one method to create the fusion-value. The merging module may make use of the different kind of the multiple detection processes, and it may merge the results by mapping the result of one attributed image of one kind on an attributed image of another kind. The fusion, i.e. the combination of the outputs of the selection module and the merging module, may be based on a probabilistic model, where each of the detection processes' outputs are integrated.

A further aspect of this invention relates to a method for detecting an object on a driveway, by means of a detection system according to the above and/or the below description. The method comprises the steps of:
a) Capturing, by means of a mono-camera, an image of at least a part of the driveway;
b) Determining, by means of a determining module, a distinctive part of the image as an object-candidate;
c) Estimating, by means of a depth module, a depth-value of the object-candidate;
d) Estimating, by means of a classification module, an object-class of the object-candidate;
e) Estimating, by means of an image-processing module, a block-value of the object-candidate; and
f) Selecting according to a predefined criterion, by means of a fusion module, at least one of the depth-value, the object-class, and/or the block-value, and creating a fusion-value,
wherein the object detection system confirms the object-candidate as a detected object, when the fusion-value fulfils a predefined hypothesis.

In an embodiment, the steps c), d), and e) are executed in parallel. "Parallel" may mean, e.g., processing steps c), d), and e) by a hardware that is configured to work in a concurrent mode. "Parallel" may mean a "quasiparallel" execution of these steps, e.g. by running these steps on the same monoprocessor system.

In an embodiment, the method further comprises the step of:
g) Storing, by means of a tracking module, at least the object-candidate and the fusion-value of the detected object. The storing may be done on a memory, which is placed in the vehicle, on a server, and/or within a cloud.

A further aspect of this invention relates to a program element, which is arranged to execute a method according to the above and/or the below description, when executed on a processing unit. The processing unit may comprise one or more processors. The processing unit may comprise specialised hardware, e.g. one or more graphic processing units, and/or neural processing units (NPU) .

A further aspect of this invention relates to a use of an object detection system according to the above and/or the below description for a vehicle, particularly for a vehicle with a driver assistance system, particularly for a semi-autonomous or an autonomous vehicle.

A further aspect of this invention relates to a computer-readable device, where the program element is stored on.

Exemplary embodiments will be described in the following, with reference to the following drawings, wherein:
**Fig. 1** depicts a schematic survey of a driveway with an object;
**Fig. 2** depicts an embodiment of an object detection system according to the present invention;
**Fig. 3** depicts exemplary output-pictures of some modules of the object detection system according to an embodiment of the present invention;
**Fig. 4** depicts a flow chart of an exemplary embodiment according to an embodiment of the present invention.

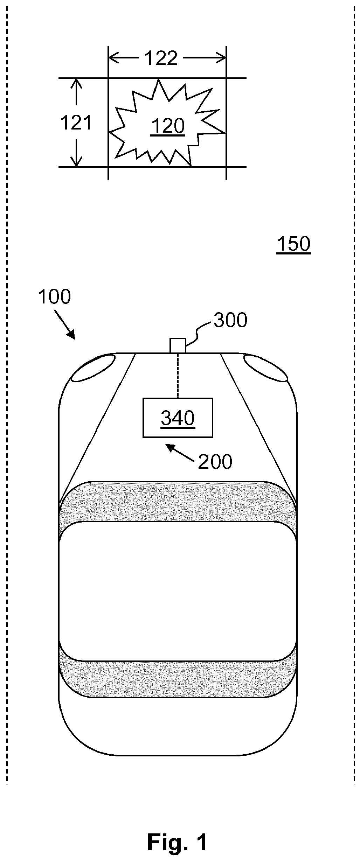

**Fig. 1** depicts a schematic survey of a driveway 150 with an object 120, which a vehicle 100 is going to encounter. Lanes and/or other markings may frame the driveway 150. The object 120 may be placed in front of the vehicle 100. The object 120 has a height 121 and a width 122. The object 120 is a non-structured object and may comprise one or more than one partial objects, e.g. stones spread over the driveway 150. The object 120 may be big enough to be a potential threat for the vehicle 100. The vehicle 100 comprises, e.g. on its front, a mono-camera 300 configured to capture an image 320 of at least a part of the driveway 150. In the situation shown, the image 320 of the driveway 150 comprises the object 120. The mono-camera 300 may be part of a camera-system that comprises more than one camera, e.g. a stereo-camera or a surround-view camera system. The camera 300 is connected to a processing unit 340, where at least a detection system 200 is run on.

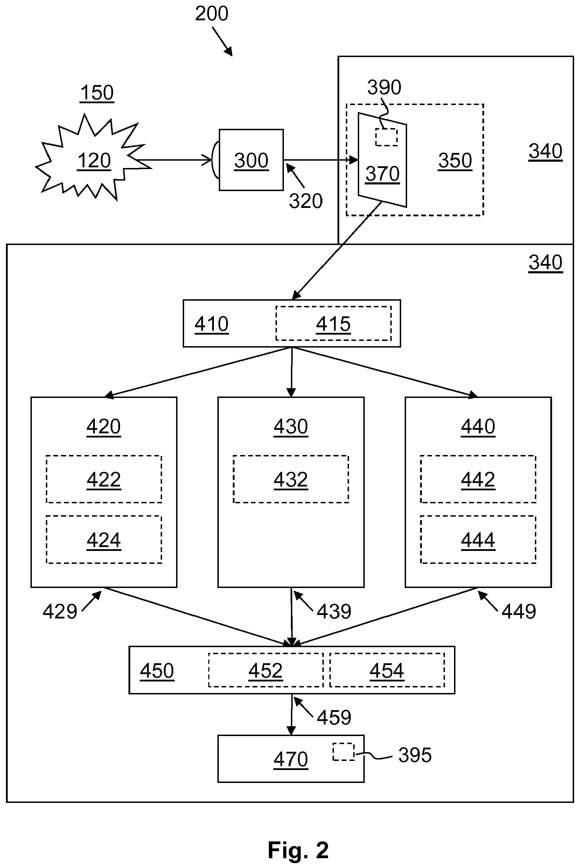

**Fig. 2** depicts an embodiment of the object detection system 200, wherein the detection system 200 comprises one or more processing units 340. The processing unit 340 is connected to the camera 300. The camera 300 is configured to capture an image 320 of at least a part of the driveway 150 (see **Fig. 1**). The driveway 150 comprises the object 120. The image 320, at an output of the camera 300, is transferred to a memory 350, where the image 320 is stored as an image-file 370. The image-file 370 includes a picture of the object 120. A determining module 410 accesses the memory 350 with the image-file 370. The memory 350 and/or the image-file 370 may be accessed by further modules of detection system 200, too. The determining module 410 determines a distinctive part of the image 320 or of the image-file 370 as a region of interest or an object-candidate 390. The determining module 410 may comprise a pre-processing module 415. The result of the determining module 410, particularly the object-search region of interest or the object-candidate 390, is used as an input by a depth module 420, a classification module 430, and an image-processing module 440. These modules are arranged in parallel, to perform, in this exemplary embodiment, a parallel processing on the object-candidate 390.

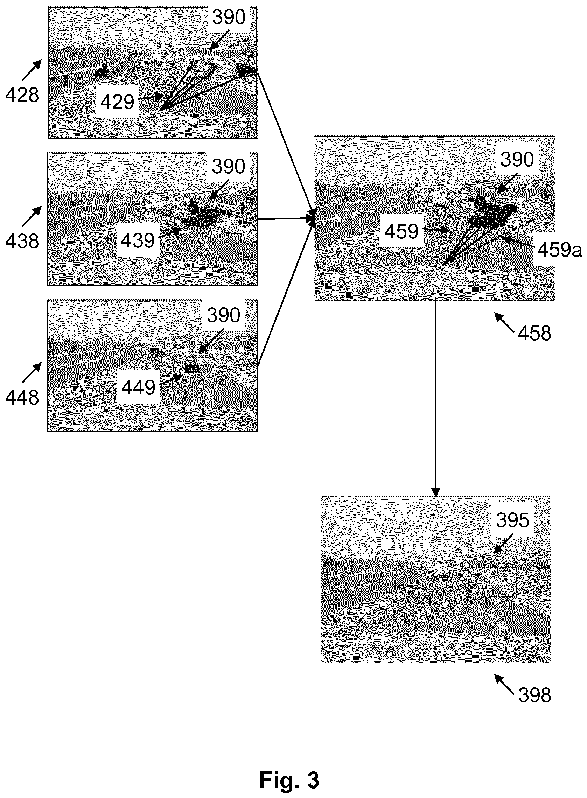

The depth module 420 is configured to estimate a depth-value 429 of the object-candidate 390. The depth-value 429 is provided at an output of the depth module 420. The depth module 420 may comprise a depth map module 422 and/or a Structure from Motion (SfM) module 424. To provide the depth-value 429, the depth map module 422 may access the results of a calibrated camera and may then, based on the image provided by the mono-camera 300, output the depth-value 429. The SfM module 424 may use a sequence of images, i.e. temporally earlier images, and, additionally, local information, e.g. by a tachometer. The SfM module 424 may output another depth-value 429. The depth-values from the depth map module 422 and the SfM module 424, respectively, may be combined by the depth module 420, e.g. by using a weighted average. In **Fig. 3**, an exemplary picture 428 displaying some outputs of the depth module 420 is shown. In this picture 428, a scenario with broken "debris" object-candidates 390 (depicted as several black boxes) is shown. It is clearly visible that several depth-values 429 - i.e. one for each of the "debris" object-candidates 390 - are computed, and each of the several depth-values 429 is related to each of the broken parts.

Coming back to **Fig. 2**, the classification module 430, which is configured to classify an object-class 439 of the object-candidate 390, is shown. The classification module 430 may comprise a trained neural network 432, e.g. a CNN. The classification module 430 provides, e.g., the object-candidate 390 classified as belonging to the "debris" object-class. Referring to **Fig. 3**, an exemplary picture 438 displays the output 439 of the classification module 430 as a classified "debris" object-class 439 (depicted as an unstructured black area).

Turning again to **Fig. 2**, the image-processing module 440 is a further module that uses the output of determining module 410. The image-processing module 440 is configured to estimate a block-value 449 of the complete region or the object-candidate 390. The image-processing module 440 may comprise an object identifier module 442, and/or an object clustering module 444. In the exemplary picture 448 of **Fig. 3**, the block-value 449 is shown as a black box. The black box is not exactly rectangular, but comprises several rectangular areas, because some clustering of (smaller) rectangles has been performed.

In **Fig. 2**, the outputs 429, 439, and 449 are connected to a fusion module 450. The fusion module 450 is configured to select, according to a predefined criterion, at least one of the depth-value 429, the object-class 439, and/or the block-value 449, and to create a fusion-value 459. The fusion module 450 may comprise a selection module 452, and/or a merging module 454. The exemplary picture 458 of **Fig. 3** displays schematically the fusion-value 459. It is clearly visible that the object-candidate 390 in exemplary picture 458 depicts some attributes of previous exemplary pictures 428, 438, and 448, e.g. the unstructured black area from picture 438, and the rectangular structure of picture 448. Further, it is clearly visible that at least one of the results of picture 428 has not been used for the fusion picture 458, e.g. the result or attribute that relates to broken line 459a.

The tracking module 470 may store the results of the previous stages of the object detection system 200, i.e. the detected object 395 is stored in the tracking module 470; see **Fig. 2****.** The tracking module 470 may be used to improve the inference-quality of the previous modules 410, 420, 430, 440, and 450. In **Fig. 3****,** the (confirmed) result of fusion module 450, i.e. the detected object 395 is displayed as a rectangular box around the detected object 395.

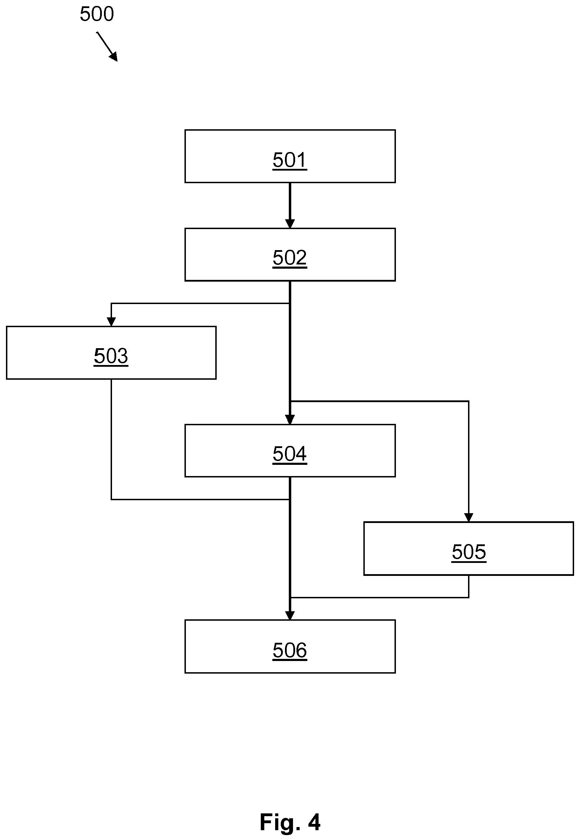

**Fig. 4** depicts a flow chart 500 of an exemplary embodiment according to an embodiment of the present invention. In a step 501, an image 320 of at least a part of a driveway 150 is captured, by means of a mono-camera 300 (cf. **Fig. 1**). In a step 502, a distinctive part of the image 320 as object-candidate 390 is determined, by means of a determining module 410 (cf. **Fig. 2**). In a step 503, a depth-value 429 of the object-candidate 390 is estimated, by means of a depth module 420. In a step 504, an object-class 439 of the object-candidate 390 is estimated, by means of a classification module 430. In a step 505, a block-value 449 of the object-candidate 390 is estimated, by means of an image-processing module 440. Steps 503, 504, and 505 may be performed in parallel, or in a quasiparallel way. In a step 506, at least one of the depth-value 429, the object-class 439, and/or the block-value 449, and creating a fusion-value 459 is selected, by means of a fusion module 450. The object detection system 200 confirms the object-candidate 390 as a detected object 395, when the fusion-value 459 fulfils a predefined hypothesis.

### List of Reference Signs

- 100: vehicle
- 120: object
- 121: height
- 122: width
- 150: driveway
- 200: detection system
- 300: camera
- 320: image
- 340: processing unit
- 350: memory
- 370: image-file
- 390: object-candidate
- 395: detected object
- 410: determining module
- 415: pre-processing module
- 420: depth module
- 422: map module
- 424: Structure from Motion (SfM) module
- 428,: 438, 448 exemplary picture
- 429: depth-value
- 430: classification module
- 432: neural network
- 439: object-class
- 440: image-processing module
- 442: identifier module
- 444: clustering module
- 449: block-value
- 450: fusion module
- 452: selection module
- 454: merging module
- 458: exemplary picture
- 459: fusion-value
- 459a: broken line
- 470: tracking module
- 500: flow chart
- 501 - 506: steps

## Claims

1. An object detection system (200) for a vehicle (100), for detecting an object (120) on a driveway (150), the detection system (200) comprising:
a camera (300) configured to capture an image (320) of at least a part of the driveway (150),
a determining module (410) configured to determine a distinctive part of the image (320) as an object-candidate (390);
a depth module (420) configured to estimate a depth-value (429) of the object-candidate (390),
a classification module (430) configured to classify an object-class (439) of the object-candidate (390),
an image-processing module (440) configured to estimate a block-value (449) of the object-candidate (390), and
a fusion module (450) configured to select, according to a predefined criterion, at least one of the depth-value (429), the object-class (439), and/or the block-value (449), and to create a fusion-value (459),
wherein the object detection system (200) is configured to confirm the object-candidate (390) as a detected object (395), when the fusion-value (459) fulfils a predefined hypothesis.

2. The object detection system (200) of claim 1, further comprising:
a tracking module (470) configured to store at least the detected object (395).

3. The object detection system (200) of claim 2,
wherein the tracking module (470) is configured to modify the predefined hypothesis.

4. The object detection system (200) of any one of the preceding claims, further comprising:
a pre-processing module (415) configured to limit the scope for finding the object-candidate (390) within the image-file (370) to the driveway (150).

5. The object detection system (200) of any one of the preceding claims,
wherein the object (120) has a height (121) of between 1 cm and 100 cm, particularly between 2 cm and 10 cm, and a width (122) of between 5 cm and 200 cm, particularly between 10 cm and 50 cm.

6. The object detection system (200) of any one of the preceding claims,
wherein the depth module (420) comprises at least one of:
a depth map module (422), and/or
an Structure from Motion, SfM, module (424).

7. The object detection system (200) of any one of the preceding claims,
wherein the classification module (430) comprises a trained neural network (432).

8. The object detection system (200) of any one of the preceding claims,
wherein the image-processing module (440) comprises at least one of:
an object identifier module (442), and/or
an object clustering module (444).

9. The object detection system (200) of any one of the preceding claims,
wherein the fusion module (450) comprises at least one of:
a selection module (452), and/or
a merging module (454).

10. A method for detecting an object (120) on a driveway (150), by means of a detection system (200) according to any one of the preceding claims, the method comprising the steps of:
a) Capturing, by means of a mono-camera (300), an image (320) of at least a part of the driveway (150);
b) Determining, by means of a determining module (410), a distinctive part of the image (320) as an object-candidate (390) ;
c) Estimating, by means of a depth module (420), a depth-value (429) of the object-candidate (390);
d) Estimating, by means of a classification module (430), a object-class (439) of the object-candidate (390);
e) Estimating, by means of an image-processing module (440), a block-value (449) of the object-candidate (390); and
f) Selecting according to a predefined criterion, by means of a fusion module (450), at least one of the depth-value (429), the object-class (439), and/or the block-value (449), and creating a fusion-value (459),
wherein the object detection system (200) confirms the object-candidate (390) as a detected object (395), when the fusion-value (459) fulfils a predefined hypothesis.

11. The method of claim 10,
wherein steps c), d), and e) are executed in parallel.

12. The method of claim 10 or 11, further comprising the step of:
g) Storing, by means of a tracking module (470), at least the object-candidate (390) and the fusion-value (459) of the detected object (395).

13. Program element, which is arranged to execute a method according to any one of claims 10 to 12, when executed on a processing unit (340).

14. Computer-readable device, where the program element according to claim 13 is stored on.

15. Use of an object detection system (200) according to any one of claims 1 to 9 for a vehicle, particularly for a vehicle with a driver assistance system, particularly for a semi-autonomous or an autonomous vehicle.
